# EUROPEAN PATENT SPECIFICATION

(11) **EP 3 904 577 B1**
(45) Date of publication and mention of the grant of the patent: **03.05.2023**
(21) Application number: 21160662.9
(22) Date of filing: 04.03.2021
(51) Int. Cl.: D04B 21/14

(54) **BIDIRECTIONAL LOW TEARING STRENGTH SPACER TEXTILE USING WARP KNITTING**
ABSTANDSTEXTIL MIT BIDIREKTIONAL GERINGER REISSFESTIGKEIT UNTER VERWENDUNG VON KETTENWIRKEN
TEXTILE D'ESPACEMENT BIDIRECTIONNEL À FAIBLE RÉSISTANCE À LA DÉCHIRURE UTILISANT LE TRICOTAGE À CHAÎNE

(30) Priority: 28.04.2020 KR 20200051800
(43) Date of publication of application: 03.11.2021
(73) Proprietor: TKG ECO MATERIAL CO., LTD., Busan 46756 (KR)
(72) Inventor: KIM, Man Young, Busan 47904 (KR); CHOI, Dae Kun, Busan 48064 (KR); SEO, Jun Hyeong, Busan 48063 (KR)
(74) Representative: Groth & Co. KB

(56) References cited:
- US-A1- 2012 055 202

## Description

### TECHNICAL FIELD

The present invention relates to a bidirectional low tearing strength spacer textile using warp knitting, the spacer textile comprising:
a surface textile layer;
a rear surface textile layer; and
a spacer thread connecting the textile layers,
wherein the surface textile layer and the rear surface textile layer include a main thread provided with a plurality of open loops formed with openings in a longitudinal direction,
wherein the surface textile layer and the rear surface textile layer further include an additional thread having leg portions transversely connected to the main thread by closed loops formed at a portion being overlapped with the main thread,
wherein the additional thread is a monofilament, and
wherein the main thread has open loops continuously formed on one wale, and the additional thread has closed loops discontinuously formed at portions being overlapped with the main yarn, wherein the main thread is knitted in the wale direction with a plurality of open loops and does not cross between pairs of wales, and the closed loops of the additional thread cross-connect the pairs of wales with their leg portions.

### BACKGROUND ART

Currently, the use of 3D warp knitting (Double Raschel) products that can express the same cushioning feeling from low-cost polyurethane foam, which is an existing vehicle cushioning material, is expanding due to increased demand for high-end vehicles and eco-friendly products.

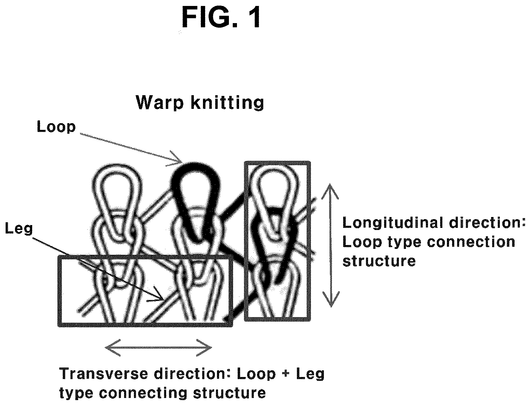

As a prior art, registered utility model No. 20-0238028 discloses warp knitted paper having excellent breathability and cushioning properties. In addition, FIG. 1 shows a structure of conventional warp knitting in the longitudinal and transverse direction, and shows a connection structure in the form of a loop in the longitudinal direction and a connection structure in the form of a loop and a leg in the transverse direction.

However, in the case of a currently applied 3D warp knitting (Double Raschel) product, although there is no problem in expressing the feeling of cushion, it should be easily torn regardless of the longitudinal and transverse directions when it is used in the airbag deployment line, but since the structure in the longitudinal and transverse directions is different due to the characteristics of warp knitting products, there is a limit to obtain the required tearing property values in both directions, and thus, there is a problem that it is not easily torn in both longitudinal and transverse directions.

In addition, even in the case of warp knitting used for a portion of a conventional airbag deployment line, as for example disclosed in publication US 2012/0055202 A1, there is a problem in that an excessive amount of an adhesive applied during warp knitting is consumed. In other words, in the case of conventional warp knitting, the gap between loops is large, so a significant amount of the injected adhesive seeps through the gaps of the warp knitting loops and is not used for actual fabric bonding, thereby being a factor of cost increase.

Another prior art publication is Korea Utility Model Registration No. 20-0238028.

### SUMMARY OF THE INVENTION

### Technical Subject

Therefore, the object of the present invention is to provide a spacer textile utilizing warp knitting that can be easily ruptured when an airbag is deployed due to a certain external force applied thereto regardless of the longitudinal and transverse directions, and having a low tearing strength in both longitudinal and transverse directions while reducing the amount of adhesive used.

### Technical Solution

In order to achieve the above object, the present invention provides a spacer textile comprising a surface textile layer, a rear surface textile layer, and a spacer thread connecting the textile layers, wherein the surface textile layer and the rear surface textile layer include a main thread provided with a plurality of open loops formed with openings in a longitudinal direction.

The invention is set out in the appended set of claims.

### Advantageous Effects

According to the present invention, during longitudinal tensioning, the original yarn is easily unwound due to an open loop structure in which an opening of a main thread is formed, and during transverse tensioning, the additional thread is easily torn due to the use of a weak mono yarn, so that a spacer textile with low tearing strength in both directions can be implemented.

In addition, the closed loop of the additional thread is formed discontinuously at a portion being overlapped with the main thread and does not affect the longitudinal properties of the main thread, thereby making it easier to implement low tearing strength during longitudinal tensioning.

In addition, it is possible to provide a spacer textile using warp knitting that has low tearing strength in both longitudinal and transverse directions while reducing the amount of adhesive used during manufacture.

### BRIEF DESCRIPTION OF DRAWINGS

FIG. 1 is a schematic diagram showing a structure of conventional warp knitting in the longitudinal and transverse directions.
FIG. 2 is a schematic diagram showing a structure of a spacer textile according to an embodiment of the present invention.
FIG. 3 is a schematic diagram showing a structure of an outer surface of a surface textile layer according to an embodiment of the present invention.
FIG. 4 is a schematic diagram showing a structure of an inner side surface of a surface textile layer according to an embodiment of the present invention.
FIG. 5 is a schematic diagram illustrating the main thread structure of FIG. 3 according to an embodiment of the present invention.
FIG. 6 is a schematic diagram illustrating the additional thread structure of FIG. 4 according to an embodiment of the present invention.
FIG. 7 is a schematic diagram illustrating (a) an open loop structure of a main thread and (b) a closed loop structure of an additional thread according to an embodiment of the present invention.

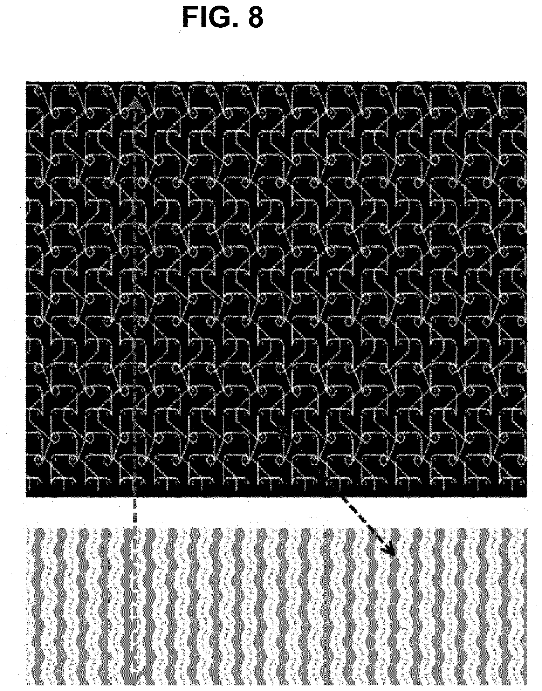

FIG. 8 is a schematic diagram showing a coupling structure of a main thread and an additional thread of a surface textile layer according to an embodiment of the present invention.

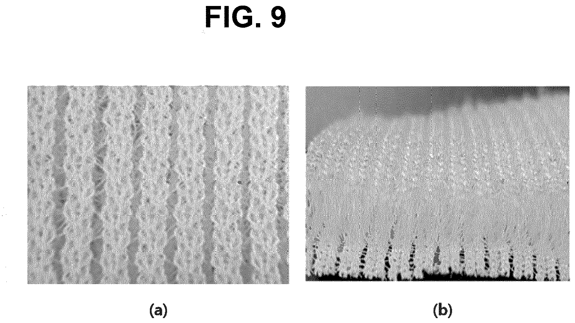

FIG. 9 is (a) a photograph of an actual outer appearance of an outer side surface of a surface textile layer and (b) a photograph of an actual outer appearance of an outer side surface of a textile layer according to an embodiment of the present invention.

### DETAILED DESCRIPTION OF THE INVENTION

Hereinafter, embodiments of the present invention will be described in more detail with reference to the accompanying drawings, but the following embodiments are for the purpose of explanation only, and are not intended to limit the scope of the present invention.

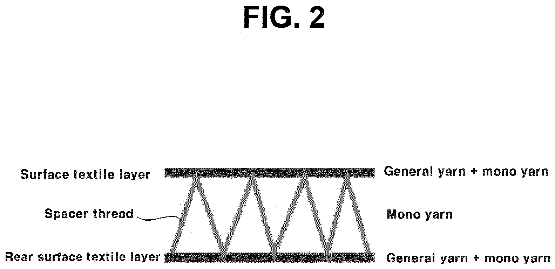

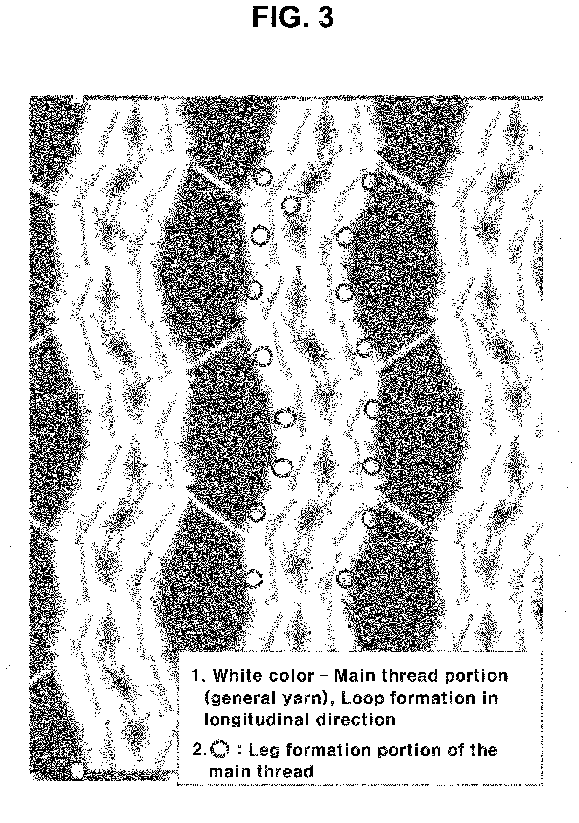

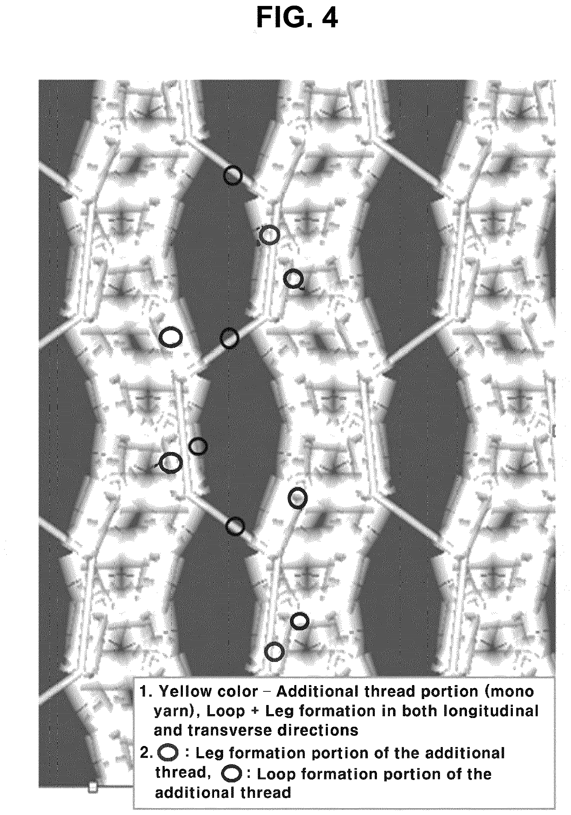

FIG. 2 is a schematic diagram showing a structure of a spacer textile according to an embodiment of the present invention, and FIGS. 3 and 4 are schematic diagrams showing structures of an outer side surface and an inner side surface of a surface textile layer according to an embodiment of the present invention.

Referring to FIGS. 2 to 4, a spacer textile according to the present invention includes a surface textile layer, a rear surface textile layer, and a spacer thread connecting the textile layers.

The surface textile layer and the rear surface textile layer are separated from each other and are connected by spacer threads to have a structure that is symmetrical on the sides opposite from each other. Therefore, for convenience of explanation, the structure and function will be described focusing on the surface textile layer, but the structure of the surface textile layer can be equally applied to the structure of the rear surface textile layer.

The surface textile layer is composed of warp knitting in which the main thread and the additional thread are combined, and forms a loop and leg structure in the longitudinal and transverse directions during knitting.

The main thread is provided with a plurality of open loops formed with openings in the longitudinal direction. That is, in the case of the main thread (white color), a loop-shaped structure is formed at all points in the longitudinal direction, but has an open loop type structure. Meaning that the main thread is knitted in the wale direction with a plurality of open loops and does not cross between pairs of wales.

The main thread (white) that forms the longitudinal structure forms a loop at all parts, but when an external force is applied in the longitudinal direction the thread can be easily unwound due to the open loop type structure so as to have a low tearing strength.

The additional thread plays the role of connecting the main thread in the transverse direction, and provided with a leg portion connecting the main thread in the transverse direction and a closed loop formed at a portion being overlapped with the main thread. Meaning that the closed loops of the additional yarn cross-connect the pairs of wales with their leg portions.

It is preferable to use a mono yarn so that the additional thread can be easily torn when stretched in the transverse direction. The mono yarn is a monofilament consisting of a single continuous synthetic fiber strand, and the fineness of mono yarn of the additional thread is 20 ~ 70 dtex (deci-tex). The main thread is composed of multifilament general yarn and has a fineness of 30 ~ 200 dtex. The weight ratio of mono yarn based on the total weight of the surface textile layer is preferably 67.4% by weight.

The spacer thread is formed of a mono yarn, and the fineness may be 20 ~ 110 dtex.

Further, in the present invention, the thickness of the spacer textile may be 1 to 8 mm, more preferably 3.8 ~ 4.2 mm.

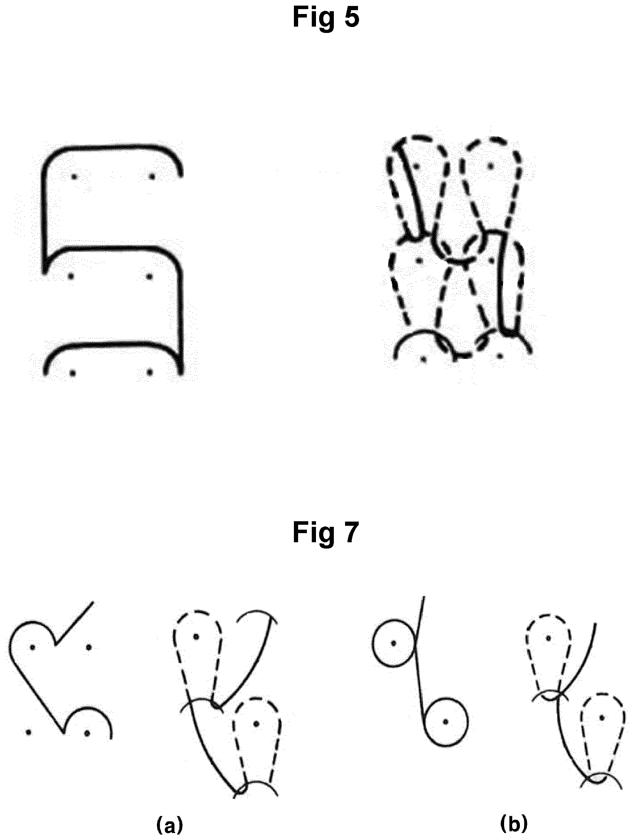

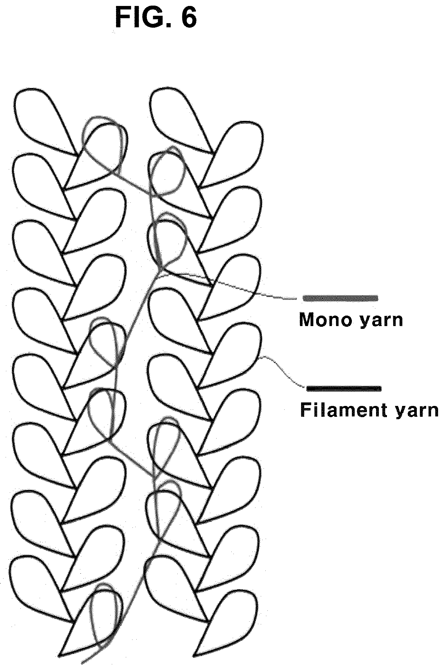

FIG. 5 describes the main thread structure of FIG. 3 according to an embodiment of the present invention, and FIG. 6 is a schematic diagram illustrating an additional thread structure of FIG. 4 according to an embodiment of the present invention. FIG. 7 is a schematic diagram illustrating (a) an open loop structure of a main thread and (b) a closed loop structure of an additional thread according to an embodiment of the present invention.

Referring to FIGS. 5 to 7, an open loop structure is provided in the longitudinal direction so that a portion (weakening point) having low tearing strength in the longitudinal and transverse directions is formed when an external force is applied from the outside, and for transverse connection, mono yarn is applied alone. Through this, the yarn may be broken by force during longitudinal tensioning, the yarn is easily unwound due to the open loop structure, and it can be easily torn due to the weak mono yarn during transverse tensioning.

According to the present invention, the number of closed loops of the additional thread is less than the number of open loops of the main thread in order to implement low tearing strength during longitudinal tension.

To this end, an open loop is continuously formed on one wale in the main thread, and a closed loop is discontinuously formed at a portion being overlapped with the main thread in the additional thread.

In other words, in the case of the additional thread, a combined structure (loop + transverse leg type structure) in which loop and leg are combined is formed instead of forming a structure all with loops so as not to affect the longitudinal properties of the portion being overlapped with the main thread (white). Due to this, the closed loop of the additional thread is formed discontinuously at the portion being overlapped with the main thread and does not affect the longitudinal properties of the main thread so that a low tearing strength can be realized more easily during longitudinal tensioning.

On the other hand, the present invention has advantages in that since an open loop is continuously formed in one wale of a thick main thread, the void generated by the loop is smaller than that of warp knitting having a conventional discontinuous main thread structure, and as a result, the fabric surface area becomes wider and so that the amount of adhesive being seeped through the fabric surface is reduced, thereby increasing adhesion efficiency.

The spacer thread according to the present invention can easily rupture when a certain external force is applied regardless of the longitudinal and transverse directions when the airbag is deployed, so that it can be applied to warp knitted products for vehicle cushions with low tearing strength in both longitudinal and transverse directions. In addition, it can be applied to interior parts such as cushioning materials for interior parts (instrument panels, door arm rests, door trims, and the like).

Meanwhile, the above detailed description should not be construed as restrictive in all respects and should be considered as illustrative. The scope of the present invention should be determined by reasonable interpretation of the appended claims, and all changes within the equivalent scope of the present invention are included in the scope of the present invention.

## Claims

1. A spacer textile comprising:
a surface textile layer;
a rear surface textile layer; and
a spacer thread connecting the textile layers,
wherein the surface textile layer and the rear surface textile layer include a main thread provided with a plurality of open loops formed with openings in a longitudinal direction,
wherein the surface textile layer and the rear surface textile layer further include an additional thread having leg portions transversely connected to the main thread by closed loops formed at portions being overlapped with the main thread,
wherein the additional thread is a monofilament, and
wherein the main thread has open loops continuously formed on one wale, and the additional thread has closed loops discontinuously formed at portions being overlapped with the main thread, wherein the main thread is knitted in the wale direction with a plurality of open loops and does not cross between pairs of wales, and the closed loops of the additional thread cross-connect the pairs of wales with their leg portions,
**characterised in that** the number of closed loops of the additional thread is less than the number of open loops of the main thread.

2. The spacer textile according to claim 1, wherein the main thread is knitted with a plurality of open loops of a double needle chain stitch pattern.

3. The spacer textile according to claim 1, wherein the fineness of the main thread is 30 ~ 200 dtex, and the fineness of the additional thread is 20 - 70 dtex.

4. The spacer textile according to claim 1, wherein the textile is a warp knit textile.

## Patentansprüche

1. Abstandstextil, umfassend:
eine Oberseitentextillage;
eine Rückseitentextillage; und
einen Abstandsfaden, der die Textillagen verbindet,
wobei die Oberseitentextillage und die Rückseitentextillage einen Hauptfaden beinhalten, der mit einer Vielzahl von offenen Maschen bereitgestellt ist, die mit Öffnungen in einer Längsrichtung gebildet ist,
wobei die Oberseitentextillage und die Rückseitentextillage ferner einen zusätzlichen Faden beinhalten, der Schenkelabschnitte aufweist, die quer mit dem Hauptfaden durch geschlossene Maschen verbunden sind, die an Abschnitten gebildet sind, die mit dem Hauptfaden überlappt sind,
wobei der zusätzliche Faden ein Monofilament ist, und
wobei der Hauptfaden offene Maschen aufweist, die kontinuierlich an einem Maschenstäbchen gebildet sind, und der zusätzliche Faden geschlossene Maschen aufweist, die diskontinuierlich an Abschnitten gebildet sind, die mit dem Hauptfaden überlappt sind, wobei der Hauptfaden in der Maschenstäbchenrichtung mit einer Vielzahl von offenen Maschen gewirkt ist und sich nicht zwischen Maschenstäbchenpaaren kreuzt, und die geschlossenen Maschen des zusätzlichen Fadens die Maschenstäbchenpaare mit ihren Schenkelabschnitten kreuzverbinden,
**dadurch gekennzeichnet, dass** die Anzahl an geschlossenen Maschen des zusätzlichen Fadens kleiner als die Anzahl an offenen Maschen des Hauptfadens ist.

2. Abstandstextil nach Anspruch 1, wobei der Hauptfaden mit einer Vielzahl von offenen Maschen eines Doppelnadelkettenstichmusters gewirkt ist.

3. Abstandstextil nach Anspruch 1, wobei die Feinheit des Hauptfadens 30 - 200 dtex beträgt und die Feinheit des zusätzlichen Fadens 20 - 70 dtex beträgt.

4. Abstandstextil nach Anspruch 1, wobei das Textil ein kettengewirktes Textil ist.

## Revendications

1. Textile d'espacement comprenant :
une couche textile de surface ;
une couche textile de surface arrière ; et
un fil d'espacement reliant les couches textiles,
dans lequel la couche textile de surface et la couche textile de surface arrière comportent un fil principal pourvu d'une pluralité de boucles ouvertes formées avec des ouvertures dans une direction longitudinale,
dans lequel la couche textile de surface et la couche textile de surface arrière comportent en outre un fil supplémentaire ayant des parties de branche reliées transversalement au fil principal par des boucles fermées formées au niveau de parties chevauchant le fil principal,
dans lequel le fil supplémentaire est un monofilament, et
dans lequel le fil principal a des boucles ouvertes formées de manière continue sur une colonne, et le fil supplémentaire a des boucles fermées formées de manière discontinue au niveau de parties se chevauchant avec le fil principal, dans lequel le fil principal est tricoté dans la direction des colonnes avec une pluralité de boucles ouvertes et ne croise pas les paires de colonnes, et les boucles fermées du fil supplémentaire relient les paires de colonnes avec leurs parties de branche,
**caractérisé en ce que** le nombre de boucles fermées du fil supplémentaire est inférieur au nombre de boucles ouvertes du fil principal.

2. Textile d'espacement selon la revendication 1, dans lequel le fil principal est tricoté avec une pluralité de boucles ouvertes d'un motif de point de chaînette à double aiguille.

3. Textile d'espacement selon la revendication 1, dans lequel la finesse du fil principal est de 30 - 200 dtex, et la finesse du fil supplémentaire est de 20 - 70 dtex.

4. Textile d'espacement selon la revendication 1, dans lequel le textile est un textile tricoté chaîne.
